# EUROPEAN PATENT SPECIFICATION

(11) **EP 1 708 212 B1**
(45) Date of publication and mention of the grant of the patent: **15.09.2010**
(21) Application number: 06250686.0
(22) Date of filing: 09.02.2006
(51) Int. Cl.: H01G 4/12

(54) **Method for manufacturing dielectric ceramic BaTiO3 powder, and multilayer ceramic capacitor obtained by using the ceramic powder**
Verfahren zur Herstellung von dielektrischen keramischen BaTiO3 Pulvern und mit diesem Pulver hergestellter keramischer Mehrschichtkondensator
Procédé pour fabriquer de la poudre céramique diélectrique de BaTiO3 et condensateur multicouche obtenu à partir de cette poudre céramique diélectrique

(30) Priority: 29.03.2005 KR 2005025891
(43) Date of publication of application: 04.10.2006
(73) Proprietor: Samsung Electro-Mechanics Co., Ltd., Suwon, Kyungki-do (KR)
(72) Inventor: Ryu, Sung Soo, Yangsan, Kyungsangnam-do (KR); Park, Seon Cheol, Youngtong-ku, Suwon, Kyungki-do (KR); Lee, Sang Pyo, Jangyoo-myun, Kimhae, Kyungsangnam-do (KR); Sinn, Dong Sook, Seoul (KR); Lee, Sang Kyun, Youngtong-ku, Suwon, Kyungki-do (KR); Yoon, Dang Hyok, Kwonsun-ku, Suwon, Kyungki-do (KR)
(74) Representative: Powell, Timothy John

(56) References cited:
- EP-A- 1 017 069
- EP-A- 1 130 004
- WO-A-03/100799
- FR-A- 782 028
- US-A- 5 030 286
- US-A- 5 783 165
- US-A1- 2001 036 896
- US-A1- 2003 012 727
- STOJANOVIC B D ET AL: "Electrical properties of screen printed BaTiO3 thick films" JOURNAL OF THE EUROPEAN CERAMIC SOCIETY, ELSEVIER SCIENCE PUBLISHERS, BARKING, ESSEX, GB, vol. 24, no. 6, 2004, pages 1467-1471, XP004485399 ISSN: 0955-2219
- GAVOGLIO M ET AL: "INFLUENCE OF THE CO2 BACK FLUX ON THE REACTION MECHANISMS OF BATIO3 FORMATION FROM HIGH TIO2 CONTENT IN TIO2-BACO3 MIXTURES" CERAMICS INTERNATIONAL, ELSEVIER, AMSTERDAM, NL, vol. 10, no. 4, October 1984 (1984-10), pages 132-134, XP009011757 ISSN: 0272-8842
- FERNANDEZ J F ET AL: "REACTION KINETICS IN THE BARIUM TITANATE (BATIO3) SYNTHESIS: INFLUENCE OF THE TITANIA CRYSTALLINE STRUCTURE AND MORPHOLOGY" MATERIALS SCIENCE MONOGRAPHS, ELSEVIER SCIENTIFIC PUBLISHING, AMSTERDAM, NL, 1991, pages 1973-1982, XP009042188 ISSN: 0166-6010

## Description

### CLAIM OF PRIORITY

This application claims the benefit of Korean Patent Application No. 2005-25891 filed on March 29, 2005, in the Korean Intellectual Property Office.

### BACKGROUND OF THE INVENTION

### Field of the Invention

The present invention relates to a method for manufacturing dielectric ceramic powder. More particularly, the present invention relates to a method for manufacturing dielectric ceramic powder by using wet-milled BaCO₃ as raw powder to prepare raw ceramic powder via solid state reaction, thereby ensuring a fine particle size and uniform particle size distribution; and to a multilayer ceramic capacitor made from the ceramic powder.

### Description of the Related Art

The information society of the 21st century has seen an increasing trend of digitalization, high-performance and high-reliability and multimedia in products such as electronic appliances, PC and HHP which chiefly utilize the Multilayer Ceramic Capacitor (MLCC), one of the necessary passive devices of the electronics industry. Accordingly, MLCC part designs have undergone capacity increases and minimization. However such developments require sheet lamination and fine BaTiO₃ particles having uniform size distribution as the dielectric powder used. Also, tetragonality indicated by ac/a ratio of c-axis to a-axis of BaTiO₃ powder crystal needs to be high (i.e more than 1.008).

BaTiO₃ powder has been produced by hydrothermal synthesis, an alkoxide method, solid state reaction and the like.

In hydrothermal synthesis, gel-type titanium hydrate is added to a great quantity of barium hydroxide to react at a high temperature of about 150°C and under a high atmospheric pressure of 10 bar, thereby producing crystalline BaTiO₃. This method has the advantage of directly producing spherical crystal BaTiO₃ sized at about 100nm but has the disadvantage of difficult design and maintenance of the process reactor, and expensive manufacturing costs. Furthermore, recently, BaTiO₃ powder produced by hydrothermal synthesis has revealed significant defects such as oxygen vacancy and barium vacancy, which develop into pores in the case of heat treatment, thus causing deterioration of the properties of the BaTiO₃ powder.

Meanwhile in synthesizing BaTiO₃ via hydrolysis of a metal alkoxide, metal alkoxide alcohol solution and Ba (OH) aqueous solution are mixed in a tube-type static mixer to react at a temperature of 80°C. This method is advantageous due to the following reasons. The liquid phase employed therein as starting material is more reactive than solid gel-type titanium hydrate used in hydrothermal synthesis. This allows synthesizing at a relatively low temperature, and easy adjustment of the synthesized powder particle size to about 20 to 100 nm. However this method has drawbacks in that a synthesis device is hard to configure, and the alkoxide reagent used as starting material is expensive. The material cost is additionally expensive due to use of an alcohol solvent, and complicated process conditions such as the synthesis temperature hamper mass productions.

Therefore, to manufacture low-priced BaTiO₃, a solid state reaction is most advantageous (see for example documents EP-A-1 180 004, and ISSN 09 552 219). In a solid state reaction, BaCO₃ powder and TiO₂ powder are used as the starting powder. The BaCO₃ powder and TiO₂ powder are mixed, and then undergo solid phase reaction in a calcination process to be synthesized into final BaTiO₃ powder. To achieve lamination of dielectric layers, dielectric material powder should have a small particle size and uniform particle distribution. But BaTiO₃ manufactured by a solid state reaction reportedly does not exhibit a uniform particle size distribution compared to BTO manufactured via other methods described above. In the end, in the sold state reaction, one of the essential factors for obtaining final uniform BaTiO₃ powder concerns the uniform dispersion of BaCO₃ powder and TiO₂ powder in the early stage. Such technologies have been consistently developed.

For example, conventional technologies are disclosed in Korean Patent Application Publication Nos. 2002-0053749 and 2004-0038747. The Patent Application No. 2002-0053749 discloses barium titanate powder obtained by mixing a barium compound and titanium dioxide having a rutile ratio of up to 30% and a BET specific surface area of at least 5m²/g, and calcining the same. Meanwhile, the Patent Application No. 2004-38747 teaches a technology of absorbing an organic polymer compound into barium carbonate powder. According to inventions disclosed in the aforesaid patent application publications, advantageously, barium compound and titanium dioxide are mixed uniformly to enhance the degree of mixing. However despite dispersal of each element, the acicular shape of barium compounds remains unchanged, leading to inevitable contact among barium compounds due to their morphological properties. Consequently, there is a limit in obtaining optimal degree of mixing with titanium dioxide.

Another conventional technology is disclosed in Korean Patent Application Publication No. 2004-0020252. Herein, BaCO₃ powder is dry-milled spherically, mixed with TiO₂ powder, and then calcined. However according to the aforesaid technology, disadvantageously, such dry-milling does not reduce the number of BaCO₃ particles, and high stress placed on BaCO₃ does not disperse BaCO₃ particles properly,' thus leading to agglomeration. A large specific surface area of powder, or small particle size, results in uniform dispersion, but BaCO₃ according to the aforesaid technology does not diminish the particle numbers, rendering uniform mixing with TiO₂ difficult. Thus, the BaTiO₃ powder finally obtained agglomerates heavily among primary particles and forms secondary particles that are relatively bigger than the primary particles, also causing uneven particle distribution of powder. BaTiO₃ powder with such properties may be barely dispersible when applied to the MLCC, and unsuitable for the dielectric ceramic use in the up to 1µm lamination employed to ensure a high-capacity capacitor.

### SUMMARY OF THE INVENTION

The present invention has been made to solve the foregoing problems of the prior art and it is therefore an object of the present invention to provide dielectric ceramic powder having fine particles and uniform particle size distribution, and high tetragonal crystallinity.

It is another object of the invention to provide a multilayer ceramic capacitor obtained by using such a dielectric ceramic powder.

The invention will be explained hereunder.

As identified above, a solid state reaction is the most economical method for producing BaTiO₃ powder having fine particles and uniform particle size, and high tetragonality that permits manufacture of a high-capacity MLCC.

In a solid state reaction, fine BaTiO₃ powder may be produced from BaCO₃ powder and TiO₂ powder having a large specific surface area. However the acicular shape of BaCO₃ powder obstructs uniform mixing with TiO₂ powder even in the case of mechanical mixing via beads mill equipment, and renders it difficult to obtain uniform BaTiO₃ powder after final calcination. Further, despite uniform dispersion of fine BaCO₃ and TiO₂ powders, BaCO₃ power particles grow easily in the calcination process. Therefore the BaCO₃ powder particles grow even before reacting with TiO₂ and reaching a temperature at which BaTiO₃ particles are formed, thus making uniform reaction with TiO₂ difficult

This increases unevenness of particles in a case where fine BaTiO₃ powder is produced via a solid state reaction to laminate dielectric layers.

Therefore, the inventors have conducted studies and experiments to solve problems of the solid state reaction. As a result, they confirmed that fine particles of BaCO₃ powder could be obtained effectively by wet-milling acicular-shaped BaCO₃ raw powder into a slurry and changing the particle shape from acicular to spherical. Also, the inventors found that fine BaTiO₃ powder with high tetragonality and uniform particle size distribution could be produced by mixing TiO₂ powder having a large specific surface area into such fine and spherical BaCO₃ slurry, and drying and calcinating the mixed slurry.

According to an aspect of the invention for realizing the object, there is provided a method of manufacturing dielectric ceramic powder as defined in claim 1, comprising steps of:
dispersing BaCO₃ powder into a solution of solvent and dispersant to prepare a slurry and then wet-milling the slurry;
mixing TiO₂ powder slurry into the wet-milled BaCO₃ slurry to form a mixed slurry and then drying the mixed slurry into mixed powder; and
calcining the dried mixed powder to produce RaTiO₃ powder.

According to another aspect of the invention, there is provided a method of manufacturing dielectric ceramic powder as defined in claim 14 comprising steps of:
dispersing BaCO₃ powder into a solution of solvent and dispersant to prepare a slurry and then wet-milling the slurry;
mixing CaCO₃ powder slurry and TiO₂ powder slurry into the wet-milled BaCO₃ slurry to form a mixed slurry, and then drying the mixed slurry; and
calcining the resulting dried mixed powder to produce BaCaTiO₃ powder.

According to further another aspect of the invention, there is provided a multilayer ceramic capacitor as defined in claim 27 comprising:
a multilayer ceramic structure having a plurality of dielectric layers and a plurality of internal electrodes alternating with the dielectric layers; and
external electrodes provided at both ends of the multilayer ceramic, electrically connected to at least one of the internal electrodes,
wherein the dielectric layers comprise dielectric ceramic powder manufactured according to methods claimed herein.

### BRIEF DESCRIPTION OF THE DRAWINGS

The above and other objects, features and other advantages of the present invention will be more clearly understood from the following detailed description of non-limiting embodiments of the invention taken in conjunction with the accompanying drawings, in which:

FIG. 1 illustrates a process for producing dielectric ceramic powder of the invention;

FIG. 2a is a graph illustrating particle size change as a function of the duration of wet-milling in a methods according to the invention;

FIG. 2b is a graph illustrating effects of ammonia addition on the viscosity of a BaCO₃ slurry in a wet-milling process of the invention;

FIG. 3 is a sectional view illustrating a multilayer ceramic capacitor manufactured from the dielectric ceramic powder of the invention;

FIG. 4a is SEM picture of BaCO₃ powder before wet milling;

FIG. 4b is SEM picture of BaCO₃ powder wet-milled according to the invention;

FIG. 5a is an FE-SEM picture illustrating mixed powder of BaCO₃ powder and TiO₂ powder obtained without wet milling;

FIG. 5b is an FE-SEM picture illustrating mixed powder of BaCO₃ powder wet-milled according to the invention and TiO₂ powder;

FIG. 6a is an FE-SEM picture of the mixed powder of FIG. 5a which was heat-treated at a temperature of 900°C;

FIG. 6b is an FE-SEM picture of the mixed powder of FIG. 5b which was heat-treated at a temperature of 900°C;

FIG. 7a is an FE-SEM picture illustrating morphology of BaTiO₃ powder manufactured according to a conventional solid state reaction;

FIG. 7b is a graph illustrating the particle size distribution of the BaTiO₃ powder of FIG. 7a;

FIG. 8a is an FE-SEM picture illustrating an example of morphology of BaTiO₃ powder produced according to the invention;

FIG. 8b is a graph illustrating the particle size distribution of BaTiO₃ powder of FIG. 8a;

FIG. 9a is an FE-SEM picture illustrating another example of morphology of BaTiO₃ powder obtained according to the invention; and

FIG. 9b is a graph illustrating the particle size distribution of BaTiO₃ powder of FIG. 9a.

### DETAILED DESCRIPTION OF THE PREFERRED EMBODIMENT

Preferred embodiments of the present invention will now be described in detail with reference to the accompanying drawings.

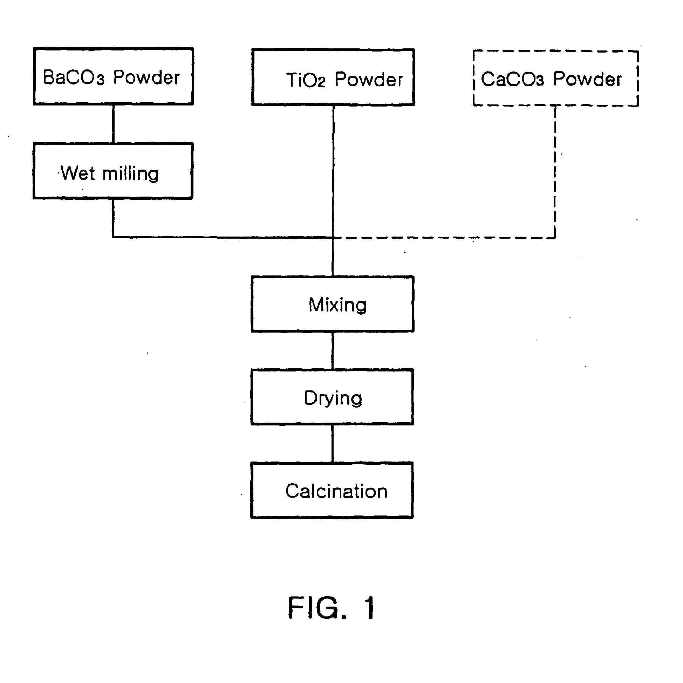

FIG. 1 illustrates a process according to the invention for manufacturing dielectric ceramic powder. As shown in FIG. 1, according to the invention, first, BaCO₃ powder is dispersed into a solution of solvent and dispersant to prepare BaCO₃ slurry. The dispersant, e.g. polyacrylic dispersant, is added to increase dispersibility of powder. Preferably, the dispersant is added in the proportion of 1 - 5 weight parts with respect to the BaCO₃ raw powder. The BaCO₃ raw powder is acicular, and preferably should have a specific surface area of 5 to 30m²/g by BET measurement.

Further, according to the invention, distilled water and alcohol may be used as the solvent, but distilled water is preferable.
More preferably, the BaCO₃ powder is dispersed into the solution to such an extent that that the BaCO₃ slurry contains 10 to 60 wt% BaCO₃. Less than 10 wt% BaCO₃ out of the BaCO₃ slurry adversely affects productivity (mass productivity). Also, BaCO₃ in excess of 60 wt% out of the BaCO₃ slurry degrades dispersibility and impairs wet milling.

Then, according to the invention, the BaCO₃ slurry is wet-milled. The wet-milling is carried out at a speed of 1800rpm via beads mill type equipment that uses zirconia beads with a diameter of 0.3mm. Preferably, the milling duration should be limited to up to 20 hours. More preferably, the BaCO₃ powder is wet-milled so as to have a specific surface area of at least 30m²/g by BET measurement.

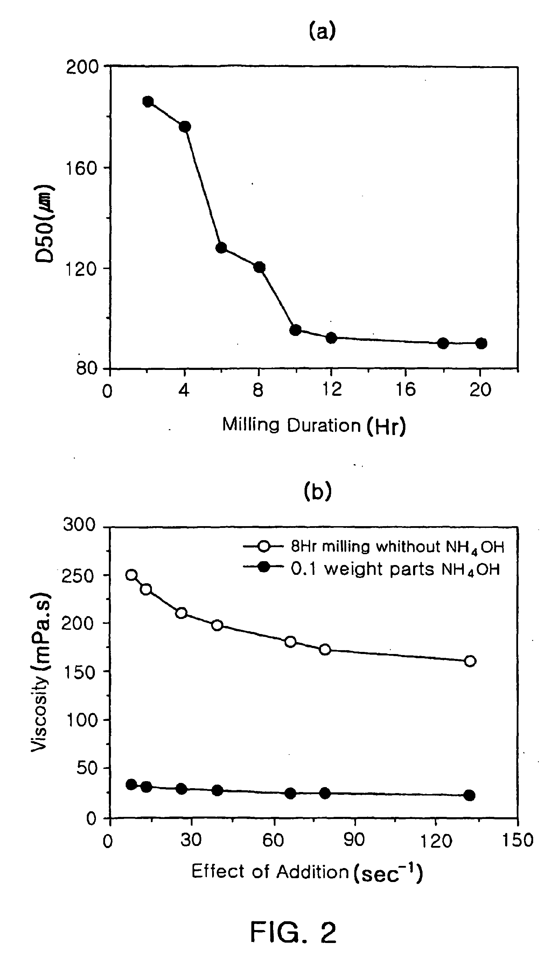

With increasing milling time of the BaCO₃ slurry the particle size of BaCO₃ powder decreases, leading to continuous increases in the specific surface area thereof. But as shown in FIG. 2 (a), the specific surface area does not increase any more after 8 hours, increasing viscosity of the slurry significantly. However, increased viscosity renders the continuous wet-milling process difficult and thus it is necessary to reduce viscosity.

Therefore, according to the invention, to reduce viscosity of slurry, as shown in FIG. 2(b), ammonia should be preferably added in the wet-milling process. More preferably, the ammonia can be added to at least 0.1 wt% with respect to the solvent.

Then, according to the invention, TiO₂ powder slurry is mixed into the wet-milled BaCO₃ slurry to form mixed slurry. TiO₂ slurry can be easily manufactured by dispersing TiO₂ powder into a solution of solvent and dispersant. The TiO₂ raw powder preferably has a specific surface area of at least 20m²/g, and more preferably at least 45m²/g.

At this time, to produce BaTiO₃ powder in a following process, TiO₂ powder is mixed into a slurry to such an extent that a Ba/Ti mole ratio becomes 1. In this mixing process, the BaCO₃ slurry and TiO₂ slurry can be wet-mixed by zirconia beads with a diameter of 0.3mm.

Meanwhile, sheet lamination of a high-capacity MLCC increases the induced electric field, as a result deteriorating IR and TCC properties. Therefore, to solve this problem, if necessary, TiO₂ slurry and CaCO₃ slurry as well may be mixed into the wet-milled BaCO₃ slurry. With such mixing of CaCO₃ slurry Ca-doped BaTiO₃, or fine BaCaTiO₃ powder, can be obtained in a following process.

Thereafter, the mixed slurry is dried to produce dried mixed powder, preferably, at a temperature of up to 200°C. The invention is not limited to the aforesaid drying method but a spray drying method may be more preferable.

Also, if necessary, the dried powder may be coarsely crushed using an atomizer.

Additionally the dried mixed powder is calcined to synthesize a dielectric ceramic powder such as BaTiO₃ powder or BaCaTiO₃ powder. In the calcination process, BaCO₃ powder and TiO₂ powder may undergo solid state reaction to form BaTiO₃ dielectric powder. Further, in the case where CaCO₃ powder is additionally mixed, Ca-doped BaCaTiO₃ power can be obtained. Preferably, the calcination temperature ranges from 900 to 1100°C.

Powders synthesized in this fashion exhibit necking among primary particles. To be used for the MLCC, typically, the mixed powders could go through a process of separation from undamaged primary particles. To this end, according to the invention, the synthesized ceramic powder can be pulverized. The pulverizing process can be carried out effectively through deagglomeration in a beads mill.

Typical solid state reaction is applied to the dielectric ceramic powder manufactured according to the aforesaid process. Still the dielectric ceramic powder may have a uniform particle size distribution, with mean particle size of 150nm to 250nm, D10/D50 of at least 0.6 and D90/D50 of up to 1.4. based on an FE-SEM picture

Also, the dielectric ceramic powder may have at least 5. 0m₂/g of BET specific surface area and, based on an FE-SEM picture, a c/a ratio of c-axis to a-axis of the powder crystal lattice is at least 1.009.

Meanwhile, organic binder, solvent and other additives may be mixed with the dielectric ceramic powder obtained to prepare ceramic slurry, and a dielectric layer for the MLCC, or green sheets may be manufactured by using the ceramic slurry via a general tape casting method. Y₂O₃, Mn₃O₄, Cr₂O₃ and glass are used as additives.

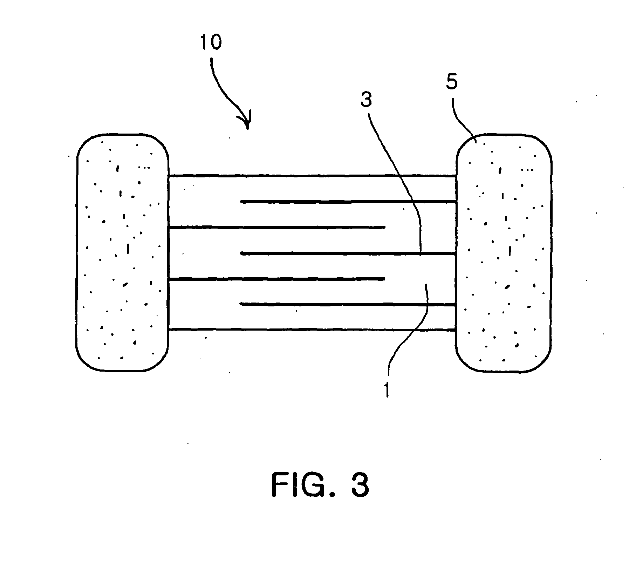

FIG. 3 is a sectional view illustrating a multilayer ceramic capacitor manufactured using the dielectric ceramic powder. As shown in FIG. 3, the multilayer ceramic capacitor (MLCC) 10 includes a multilayer ceramic structure having a plurality of dielectric layers 1 and a plurality of internal electrodes 3 alternating with the dielectric layers; and external electrodes 5 provided at both ends of the multilayer ceramic structure.

To manufacture the capacitor 10, first, ceramic slurry including the dielectric ceramic powder prepared as described above is used to form the dielectric layers 1 through the typical tape casting method. Then the internal electrodes 3 are formed on the dielectric layers 1 via screen printing. Subsequently firing is carried our for the multilayer ceramic structure including the unfired dielectric layers 1, and then a conductive paste is applied on both ends of the multilayer ceramic structure and finally fired, thereby producing the multilayer ceramic capacitor 10 having the external electrodes 5.

As described above, according to the invention, to uniformly disperse and mix BaCO₃ powder and TiO₂ powder, before mixing with TiO₂ powder, only acicular-shaped BaCO₃ powder is wet-milled to be made spherical. A spherical particle shape or significant reduction in particle size allows uniform mixing with TiO₂. Also, dielectric ceramic powder having a fine particle size of 150 to 250nm and high tetragonality can be manufactured by reacting BaCO₃ powder with TiO₂ powder before BaCO₃ powder particles grow in a calcination process.

Further, in a case where the multilayer ceramic capacitor is manufactured using the dielectric ceramic powder produced by the aforesaid process, sheet lamination is ensured to effectively realize higher-capacity of the MLCC while reducing the size thereof.

The invention will be explained in detail with reference to the non-limiting examples which follow.

### (Example 1)

BaCO₃ raw powder having a specific surface area of 20m²/g was prepared. Some of the BaCO₃ raw powder was dispersed into a mixed solution of distilled water and polyacrylic dispersant to manufacture a BaCO₃ slurry. BaCO₃ raw powder was dispersed into the solution to such an extent that the BaCO₃ slurry would contain 10 to 60wt% BaCO₃. The slurry was wet-milled for 18 hours using beads mill type equipment that uses zirconia beads with a diameter of of 0.3mm as the milling medium. During wet-milling, following a sudden increase in viscosity in accordance with the decrease in BaCO₃ particle numbers, ammonia was added after 8 hours of milling to reduce viscosity. A specific surface area of the wet-milled BaCO₃ powder was 31m²/g, a significant increase from the initial value, and the particles had almost a spherical shape.

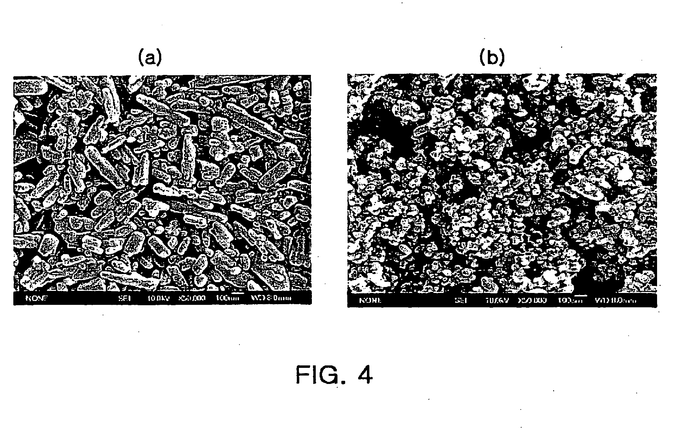

Field Emission (FE-SEM) pictures taken before and after wet-milling of the BaCO₃ are shown in FIG. 4 (a-b) . As shown in the aforesaid FIG 4 (a-b), wet-milling changed the BaCO₃ from acicular powder into finer spherical powder.

Meanwhile, slurried TiO₂ powder having a specific surface area of 45m²/g was mixed into the wet-milled BaCO₃ slurry, and then the mixed slurry was mixed using a beads mill. At this time, mixed powder was slurried so that BaTiO₃ powder would have a Ba/Ti ratio of 1. Then for comparison, BaCO₃ raw powder, which was not wet-milled, was mixed with TiO₂ powder to produce mixed powder.

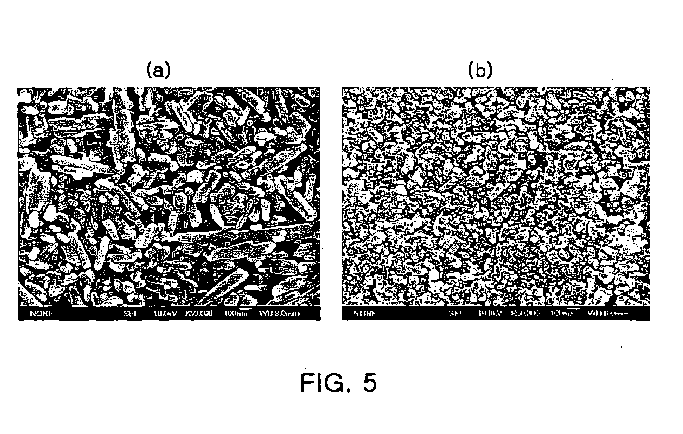

FIG. 5 (a-b) show FE-SEM pictures of the final mixed powder. FIG. 5 (a) is an FE-SEM picture illustrating BaCO₃ powder mixed with TiO₂ powder without wet-milling, while FIG. 5(b) is an FE-SEM picture of wet-milled BaCO₃ powder mixed with TiO₂ powder. As shown in FIG. 5(a-b), when BaCO₃ powder without wet -milling was mixed with TiO₂ powder, it led to uneven mixing but use of the wet-crushed BaCO₃ powder led to uniform mixing among each component.

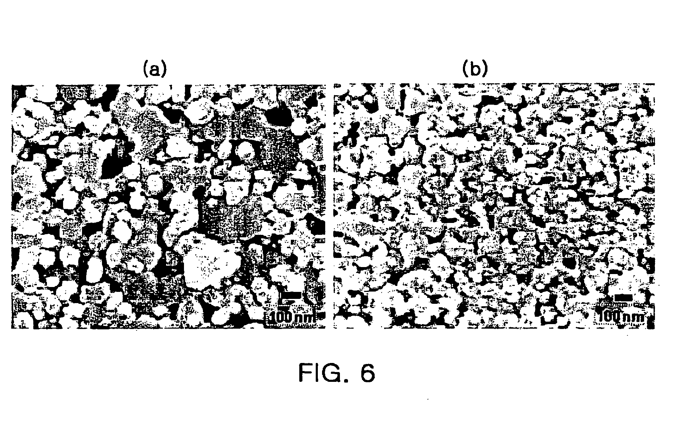

Also, to confirm whether BaCO₃ powder particles grow in the case of rising temperature during a calcination process, mixed powders prepared as above were calcined and heat-treated at a temperature ranging from 600°C to 1000°C. Consequently, as in FIG. 6(a), in the case of using BaCO₃ powder without wet-milling, BaCO₃ particles grew considerably at a temperature of 900°C, while as in FIG. 6(b), in the case where wet-milled BaCO₃ powder was used, particle growth was not observed, indicating that BaTiO₃ powder can be synthesized.

### (Example 2)

**Table 1**

| No. | Wet-milling of BaCO₃ | Specific surface area (m²/g) | | | Calcination temp. (°C) |
|---|---|---|---|---|---|
| | | BaCO₃ | TiO₂ | CaCO₃ | |
| | 1 Not wet-milled | 20 | 20 | | 1020 |
| 2 | Not wet-milled | 20 | 20 | | 1040 |
| 3 | Wet-milled | 31 | 20 | | 1020 |
| 4 | Wet-milled | 31 | 20 | | 1040 |
| 5 | Wet-milled | 31 | 45 | | 960 |
| 6 | Wet-milled | 31 | 45 | | 990 |
| 7 | Wet-milled | 31 | 45 | | 1020 |
| 8 | Wet-milled | 31 | 45 | 30 | 960 |
| 9 | wet-milled | 31 | 45 | 30 | 990 |

BaCO₃ raw powder having a specific surface area of 2.0m²/g was prepared. Some of BaCO₃ raw powder was dispersed into a mixed solution of distilled water and polyarcrylic dispersant to produce BaCO₃ slurry. BaCO₃ powder was dispersed into the solution to such an extent that BaCO₃ slurry would contain 10 to 60 wt% BaCO₃. The resultant slurry was wet milled for 18 hours using beads mill type equipment using zirconia beads with a diameter of 0.3mm as the milling medium. Following a sudden increase in viscosity in accordance with a decrease in BaCO₃ particle numbers during a wet-milling process, ammonia was added to reduce viscosity after 8-hour milling. A specific surface area of the wet-milled BaCO₃ powder is shown in Table 1 above.

Slurried TiO₂ raw powder having a different specific surface area was mixed into the wet-milled BaCO₃ slurry in the beads mill. The mixed powder was slurried so that BaTiO₃ powder would have a Ba/Ti ratio of 1, and then the mixed powder was obtained by spray drying.

Meanwhile, in manufacturing Ca-doped BaCaTiO₃ dielectric ceramic powder, as shown in Table 1, slurried TiO₂ powder and slurried CaCO₃ powder having a specific surface area of 30m²/g were mixed into the wet-milled BaCO₃. At this time, to obtain (Ba_{0.98}Ca_{0.02})_{1.000}TiO₃ powder, each of TiO₂ powder and' CaCO₃ powder were mixed into a slurry form, and then dried by spray dying to produce mixed powder.

For comparison, as shown in Table 1, some of BaCO₃ raw powder having a specific surface area of 20m²/g was wet-mixed with TiO₂ powder having a specific surface area of 20m²/g without undergoing wet-milling. The powders were measured and mixed so that resultant BaTiO₃ powder would have a Ba/Ti ratio of 1.

The resultant mixed powders were dried and calcined under the conditions set forth in Table 1 to manufacture BaTiO₃ or BaCaTiO₃ dielectric ceramic powder. Thereafter, the ceramic powder was deagglomerated using a beads mill to produce the final powder.

To examine properties of powders manufactured as above, the BET specific surface area was measured. Also, through XRD analysis, a c/a ratio of c-axis to a-axis of the powder crystal lattice was calculated to measure tetragonality, and the results are shown in Table 2 below. Mean particle size (Dₘₑₐₙ) of powder was measured using an image analyzer based on an FE-SEM picture. Further, to investigate uniformity of particle size distribution, measurement was conducted on 10% cumulative distribution D10, 50% cumulative distribution D50, and 90% cumulative distribution D90, respectively from small size distribution. The calculated results of D10/D50, D90/D50 are shown in Table 2.

**[Table 2]**

| No. | Ceramic powder | SSA* (m²/g) | MPS* (nm) | Particle size distribution | | Tetragon |
|---|---|---|---|---|---|---|
| | | | | D10/D50 | ality D90/D50 | |
| 1 | BaTiO₃ | 5.66 | 176 | 0.41 | 1.57 | 1.0070 |
| 2 | BaTiO₃ | 3.97 | 212 | 0.40 | 1.54 | 1.0097 |
| 3 | BaTiO₃ | 4.58 | 199 | 0.62 | 1.38 | 1.0097 |
| 4 | BaTiO₃ | 4.01 | 230 | 0.65 | 1.36 | 1.0103 |
| 5 | BaTiO₃ | 5.68 | 150 | 0.70 | 1.26 | 1.0093 |
| 6 | BaTiO₃ | 4.53 | 202 | 0.69 | 1.24 | 1.0105 |
| 7 | BaTiO₃ | 4.08 | 218 | 0.72 | 1.24 | 1.0105 |
| 8 | BaCaTiO₃ | 5.62 | 155 | 0.71 | 1.27 | 1.0091 |
| 9 | BaCaTiO₃ | 4.57 | 198 | 0.70 | 1.24 | 1.0103 |

| | | | | | | |
|---|---|---|---|---|---|---|
| *SSA: Specific Surface Area *MPS: Mean Particle Size | | | | | | |

As shown in Tables 1 and 2, for sample 1 in which BaCO₃ was calcined at a temperature of 1020°C without wet-milling the particles were finely-sized at an MPS of 176nm but tetragonality thereof was 1.007, which is lower than 1.008 i.e. a requirement for high-capacity dielectric powder. For sample 2 in which BaCO₃ was calcined at a temperature of 1040°C BaTiO₃ having tetragonality of 1.0097 and size of about 212nmwas synthesized.

In contrast, for sample 3, in which BaCO₃ was wet-milled and then mixed with 20m²/g of TiO₂, BaCO₃ particles were finely-sized with 199nm and tetragonality thereof was 1.0097, a high figure even at a temperature of 1020°C, which is lower than when BaCO₃ was not wet-milled. Also, for sample 6 in which BaCO₃ was wet-milled and then mixed with TiO₂ powder having a specific area of 45m²/g, the mean BaTiO₃ powder particle size was 202nm, with tetragonality of at least 1.010 at a temperature of 990°C. Further, for sample 5 in which BaCO₃ was calcined at a temperature of 960°C, BaCO₃ powder was obtained with fine particle size of 150nm and large specific surface area of 5.68m²/g. Still, the BaTiO₃ powder obtained had high tetragonality of 1.0093.

In addition, to compare particle uniformity based on cumulative particle size distribution, the calculated values of D10/D50, D90/D50 were considered. Herein, a bigger D10/D50 value and smaller D90./D50 value mean more uniform distribution.
When the calculated values are compared, wet-milled BaCO₃ indicates bigger D10/D50 and smaller D90/D50 values, and thus more uniform particle size distribution than arises without wet-milling. For mixed powders (samples 5 to 7) in which wet-milled BaCO₃ was mixed with TiO₂ having a specific surface area of 45m²/g, the particle size distributions were most uniform.

Further, Ca-added BaCaTiO₃ powder (samples 8 to 9) exhibited behavior similar to BaTiO₃ powder. By calcining at a temperature of 990°C and 960°C, BaCaTiO₃ powders having mean particle sizes of 198nm and 155nm, respectively, could be produced with tetragonalitiy of at least 1.0091 overall.

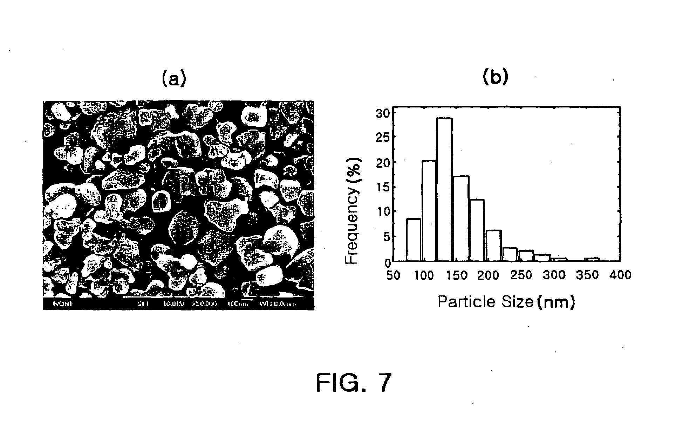

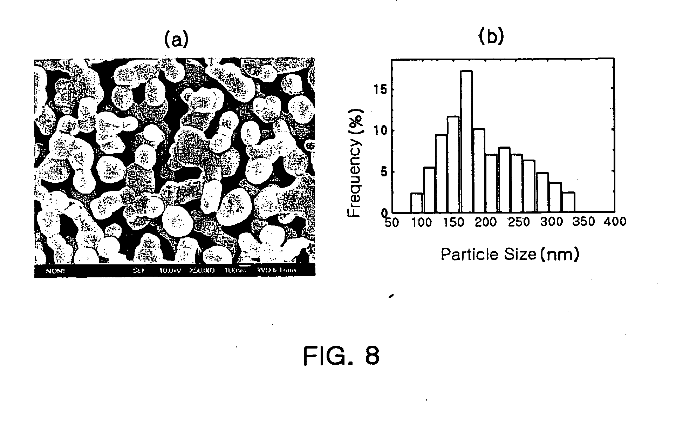

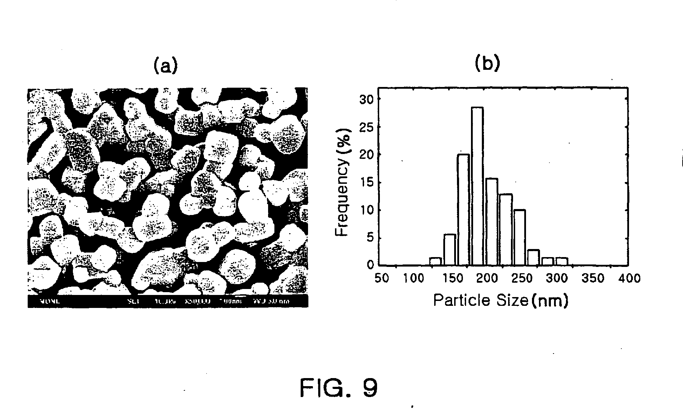

FIGs. 7a, 8a and 9a are FE-SEM pictures of dielectric ceramic powder corresponding to samples 2, 3 and 6. FIGs. 7b, 8b and 9b are graphs illustrating particle size distribution measured using an image analyzer. As shown in the above FIGs. 7a, 7b, 8b and 9b, compared to sample 2 which used BaCO₃ without wet-milling, sample 3 which used wet-milled BaCO₃ powder indicated more uniform particle size distribution. Further, the narrowest particle size distribution was found in sample 6 which used wet-milled BaCO₃ powder and TiO₂ powder having a large specific surface area.

As set forth above, according to the invention, BaTiO₃ or BaCaTiO₃ is manufactured from wet-milled BaCO₃ powder to produce uniform dielectric ceramic powder having fine particles sized from 150 to 250nm and high tetragonality.

Also, the multilayer ceramic capacitor manufactured via dielectric ceramic powder allows sheet lamination and enables higher-capacity and minimization of the MLCC.

While the present invention has been shown and described in connection with the preferred embodiments, it will be apparent to those skilled in the art that modifications and variations can be made without departing from the scope of the invention as defined by the appended claims.

## Claims

1. A method for manufacturing dielectric ceramic powder comprising the steps of:
dispersing BaCO₃ powder into a solution of solvent and dispersant to prepare a slurry and then wet-milling the slurry;
mixing TiO₂ powder slurry into the wet-milled BaCO₃ slurry to form mixed slurry and then drying the mixed slurry into mixed powder; and
calcining the dried mixed powder to produce BaTiO₃ powder.

2. The method according to claim 1, wherein the solvent comprises distilled water or alcohol.

3. The method according to claim 1, wherein the dispersant is polyacrylic, and added in the proportion of 1 ∼5 weight parts with respect to the BaCO₃ powder.

4. The method according to claim 1, wherein the BaCO₃ powder has a specific surface area ranging from 5 to 30m²/g measured by BET measurement.

5. The method according to claim 1, wherein BaCO₃ powder is dispersed into the solution to such an extent that the BaCO₃ slurry contains 10 to 60wt% BaCO₃.

6. The method according to claim 1, wherein the BaCO₃ slurry is wet-milled to such an extent that BET specific surface area of BaCO₃ powder is at least 30m²/g.

7. The method according to claim 1, wherein in the wet-milling step, ammonia is added to reduce viscosity of the slurry.

8. The method according to claim 7, wherein the ammonia is added in the proportion of at least 0.1 weight parts with respect to the solvent.

9. The method according to claim 1, wherein the TiO₂ powder has a specific surface area of at least 20m²/g.

10. The method according to claim 1, wherein the calcination temperature ranges from 900 to 1100°C.

11. The method according to claim 1, further comprising pulverizing the produced BaTiO₃ powder.

12. The method according to claim 11, wherein the pulverized BaTiO₃ powder has uniform particle size distribution, with mean particle size of 150nm to 250nm, D10/D50 of at least 0.6 and D90/D50 of up to 1.4 based on an FE-SEM picture.

13. The method according to claim 11, wherein the pulverized BaTiO₃ powder has at least 5.0m₂/g of BET specific surface area, and based on an FE-SEM picture, a c/a ratio of C-axis to a-axis of the powder crystal lattice of at least 1.009.

14. A method of manufacturing dielectric ceramic powder comprising the steps of:
dispersing BaCO₃ powder into a solution of solvent and dispersant to prepare a slurry and then wet-milling the slurry;
mixing CaCO₃ powder slurry and TiO₂ powder slurry into the wet-milled BaCO₃ slurry to form mixed slurry, and then drying the mixed slurry; and
calcining the dried mixed powder to produce BaCaTiO₃ powder.

15. The method according to claim 14, wherein the solvent comprises distilled water or alcohol.

16. The method according to claim 14, wherein the dispersant is polyacrylic, and added in the proportion of 1 - 5 weight parts with respect to the BaCO₃ powder.

17. The method according to claim 14, wherein the BaCO₃ powder has a specific surface area of 5 to 30m²/g by BET measurement.

18. The method according to claim 14, wherein BaCO₃ powder is dispersed into the solution so that the BaCO₃ slurry contains 10 to 60 wt% BaCO₃.

19. The method according to claim 14, wherein the BaCO₃ slurry is wet-milled to such an extent that the BaCO₃ powder has a specific surface area of at least 30m²/g.

20. The method according to claim 14, wherein in the wet-milling step, ammonia is added to reduce viscosity of the slurry.

21. The method according to claim 20, wherein the ammonia is added in the proportion of at least 0.1 weight parts with respect to the solvent.

22. The method according to claim 14, wherein the TiO₂ powder has a specific surface area of at least 20m²/g.

23. The method according to claim 14, wherein the calcination temperature ranges from 900 to 1100°C.

24. The method according to claim 14, further comprising pulverizing the produced BaCaTiO₃ powder.

25. The method according to claim 24, wherein the pulverized BaCaTiO₃ powder has uniform particle size distribution, with mean particle sizes of 150nm to 250nm, D10/D50 of at least 0.6 arid D90/D50 of up to 1.4 based on an FE-SEM picture.

26. The method according to claim 24, wherein the pulverized BaCaTiO₃ powder has at least 5.0m₂/g of BET specific surface area, and based on an FE-SEM picture, a c/a ratio of c-axis to α-axis of the powder crystal lattice is at least 1.009.

27. A multilayer ceramic capacitor comprising:
a multilayer ceramic structure having a plurality of dielectric layers and a plurality of internal electrodes alternating with the dielectric layers; and
external electrodes provided at both ends of the multilayer ceramic capacitor, electrically connected to at least one of the internal electrodes,
wherein the dielectric layers comprise a dielectric ceramic powder manufactured according to Claims 1 or Claim 14.

28. The multilayer ceramic capacitor according to claim 27, wherein the ceramic power has uniform particle size distribution, with mean particle size of 150nm to 250nm, D10/D50 of at least 0.6 and D90/D50 of up to 1.4 based on an FE-SEM picture.

29. The multilayer capacitor according to claim 27,
wherein the ceramic powder has at least 5.0m₂/g of BET specific surface area, and based on an FE-SEM picture, a c/a ratio of c-axis to a-axis of the powder crystal lattice is at least 1.009.

## Patentansprüche

1. Verfahren zur Herstellung eines dielektrischen Keramikpulvers mit den Schritten:
fein Verteilen von BaCO₃-Pulver in einer Lösung eines Lösungsmittels und eines Dispergiermittels, um einen Schlicker zu erzeugen und den Schlicker dann einem Nassmahlverfahren zu unterwerfen;
Zumischen von TiO₂-Pulverschlicker in den nass gemahlenen BaCO₃-Schlicker, um einen gemischten Schlicker auszubilden, und dann Trocknen des gemischten Schlickers zu einem Mischpulver; und
Kalzinieren des getrockneten Mischpulvers, um ein BaTiO₃-Pulver zu erzeugen.

2. Verfahren nach Anspruch 1, wobei das Lösungsmittel destilliertes Wasser oder Alkohol umfasst.

3. Verfahren nach Anspruch 1, wobei das Dispergiermittel Polyacryl ist und in dem Mengenverhältnis von 1 - 5 Gewichtsanteilen mit Bezug auf das BaCO₃-Pulver hinzugefügt wird.

4. Verfahren nach Anspruch 1, wobei das BaCO₃-Pulver eine spezifische Oberfläche im Bereich von 5 bis 30 m²/g aufweist, die mittels einer BET-Messung gemessen wird.

5. Verfahren nach Anspruch 1, wobei das BaCO₃-Pulver in die Lösung hinein bis zu einem solchen Umfang fein verteilt wird, dass der BaCO₃-Schlicker 10 bis 60 Gew.-% BaCO₃ enthält.

6. Verfahren nach Anspruch 1, wobei der BaCO₃-Schlicker bis zu einem solchen Umfang nass gemahlen wird, dass die spezifische Oberfläche BaCO₃-Pulvers nach BET mindestens 30 m²/g ist.

7. Verfahren nach Anspruch 1, wobei im Nassmahlschritt Ammoniak hinzugefügt wird, um die Viskosität des Schlickers zu verringern.

8. Verfahren nach Anspruch 7, wobei das Ammoniak in dem Mengenverhältnis von mindestens 0,1 Gewichtsanteilen mit Bezug auf das Lösungsmittel hinzugefügt wird.

9. Verfahren nach Anspruch 1, wobei das TiO₂-Pulver eine spezifische Oberfläche von mindestens 20 m²/g aufweist.

10. Verfahren nach Anspruch 1, wobei die Kalzinierungstemperatur im Bereich von 900 bis 1100 °C liegt.

11. Verfahren nach Anspruch 1, ferner ein Pulverisieren des hergestellten BaTiO₃-Pulvers umfassend.

12. Verfahren nach Anspruch 11, wobei das pulverisierte BaTiO₃-Pulver ausgehend von einem FE-SEM-Bild eine gleichmäßige Teilchengrößenverteilung mit einer mittleren Teilchengröße von 150 nm bis 250 nm, D10/D50 von mindestens 0,6 und D90/D50 von bis zu 1,4 aufweist.

13. Verfahren nach Anspruch 11, wobei das pulverisierte BaTiO₃-Pulver eine spezifische Oberfläche nach BET von mindestens 5,0 m²/g und ausgehend von einem FE-SEM-Bild ein c/a-Verhältnis der c-Achse zur a-Achse des Pulverkristallgitters von mindestens 1,009 aufweist.

14. Verfahren zur Herstellung eines dielektrischen Keramikpulvers mit den Schritten:
fein Verteilen von BaCO₃-Pulver in einer Lösung eines Lösungsmittels und eines Dispergiermittels, um einen Schlicker zu erzeugen und den Schlicker dann einem Nassmahlverfahren zu unterziehen;
Zumischen von CaCO₃-Pulverschlicker und TiO₂-Pulverschlicker in den nass gemahlenen BaCO₃-Schlicker, um einen gemischten Schlicker auszubilden, und dann Trocknen des gemischten Schlickers; und
Kalzinieren des getrockneten Mischpulvers, um ein BaCaTiO₃-Pulver zu erzeugen.

15. Verfahren nach Anspruch 14, wobei das Lösungsmittel destilliertes Wasser oder Alkohol umfasst.

16. Verfahren nach Anspruch 14, wobei das Dispergiermittel Polyacryl ist und in dem Mengenverhältnis von 1 - 5 Gewichtsanteilen mit Bezug auf das BaCO₃-Pulver hinzugefügt wird.

17. Verfahren nach Anspruch 14, wobei das BaCO₃-Pulver eine spezifische Oberfläche im Bereich von 5 bis 30 m²/g aufweist, die mittels einer BET-Messung bestimmt wird.

18. Verfahren nach Anspruch 14, wobei das BaCO₃-Pulver so in die Lösung hinein fein verteilt wird, dass der BaCO₃-Schlicker 10 bis 60 Gew.-% BaCO₃ enthält.

19. Verfahren nach Anspruch 14, wobei der BaCO₃-Schlicker bis zu einem solchen Umfang nass gemahlen wird, dass das BaCO₃-Pulver nach BET eine spezifische Oberfläche von mindestens 30 m²/g aufweist.

20. Verfahren nach Anspruch 14, wobei im Nassmahlschritt Ammoniak hinzugefügt wird, um die Viskosität des Schlickers zu verringern.

21. Verfahren nach Anspruch 20, wobei das Ammoniak in dem Mengenverhältnis von mindestens 0,1 Gewichtsanteilen mit Bezug auf das Lösungsmittel hinzugefügt wird.

22. Verfahren nach Anspruch 14, wobei das TiO₂-Pulver eine spezifische Oberfläche von mindestens 20 m²/g aufweist.

23. Verfahren nach Anspruch 14, wobei die Kalzinierungstemperatur im Bereich von 900 bis 1100 °C liegt.

24. Verfahren nach Anspruch 14, ferner ein Pulverisieren des hergestellten BaCaTiO₃-Pulvers umfassend.

25. Verfahren nach Anspruch 24, wobei das pulverisierte BaCaTiO₃-Pulver ausgehend von einem FE-SEM-Bild eine gleichmäßige Teilchengrößenverteilung mit einer mittleren Teilchengröße von 150 nm bis 250 nm, D10/D50 von mindestens 0,6 und D90/D50 von bis zu 1,4 aufweist.

26. Verfahren nach Anspruch 24, wobei das pulverisierte BaCaTiO₃-Pulver eine spezifische Oberfläche nach BET von mindestens 5,0 m²/g und ausgehend von einem FE-SEM-Bild ein c/a-Verhältnis der c-Achse zur a-Achse des Pulverkristallgitters von mindestens 1,009 aufweist.

27. Keramischer Mehrschichtkondensator mit:
einer keramischen Mehrschichtstruktur, die mehrere dielektrische Schichten und mehrere innere Elektroden aufweist, die sich mit den dielektrischen Schichten abwechseln; und
äußeren Elektroden, die an den beiden Enden des keramischen Mehrschichtkondensators elektrisch mit mindestens einer der inneren Elektroden verbunden sind,
wobei die dielektrischen Schichten ein dielektrisches Pulver aufweisen, das gemäß Anspruch 1 oder Anspruch 14 hergestellt wird.

28. Keramischer Mehrschichtkondensator nach Anspruch 27, wobei das Keramikpulver ausgehend von einem FE-SEM-Bild eine gleichmäßige Teilchengrößenverteilung mit einer mittleren Teilchengröße von 150 nm bis 250 nm, D10/D50 von mindestens 0,6 und D90/D50 von bis zu 1,4 aufweist.

29. Keramischer Mehrschichtkondensator nach Anspruch 27, wobei das Keramikpulver eine spezifische Oberfläche nach BET von mindestens 5,0 m²/g und ausgehend von einem FE-SEM-Bild ein c/a-Verhältnis der c-Achse zur a-Achse des Pulverkristallgitters von mindestens 1,009 aufweist.

## Revendications

1. Procédé pour fabriquer une poudre céramique diélectrique, comprenant les étapes consistant :
à disperser une poudre de BaCO₃ dans une solution d'un solvant et d'un dispersant pour préparer une suspension puis à broyer la suspension à l'état humide ;
à mélanger une suspension de poudre de TiO₂ dans la suspension de BaCO₃ broyée à l'état humide pour former une suspension mixte puis à sécher la suspension mixte en une poudre mixte ; et
à calciner la poudre mixte séchée pour produire une poudre de BaTiO₃.

2. Procédé selon la revendication 1, dans lequel le solvant comprend de l'eau distillée ou un alcool.

3. Procédé selon la revendication 1, dans lequel le dispersant est polyacrylique, et est ajouté dans la proportion de 1∼5 parties en poids par rapport à la poudre de BaCO₃.

4. Procédé selon la revendication 1, dans lequel la poudre de BaCO₃ a une surface spécifique allant de 5 à 30 m²/g, mesurée par mesure BET.

5. Procédé selon la revendication 1, dans lequel la poudre de BaCO₃ est dispersée dans la solution à un degré tel que la suspension de BaCO₃ contient 10 à 60 % en poids de BaCO₃.

6. Procédé selon la revendication 1, dans lequel la suspension de BaCO₃ est broyée à l'état humide à un degré tel que la surface spécifique BET de la poudre de BaCO₃ est d'au moins 30 m²/g.

7. Procédé selon la revendication 1, dans lequel, dans l'étape de broyage à l'état humide, de l'ammoniaque est ajoutée pour réduire la viscosité de la suspension.

8. Procédé selon la revendication 7, dans lequel l'ammoniaque est ajoutée dans la proportion d'au moins 0,1 partie en poids par rapport au solvant.

9. Procédé selon la revendication 1, dans lequel la poudre de TiO₂ a une surface spécifique d'au moins 20 m²/g.

10. Procédé selon la revendication 1, dans lequel la température de calcination va de 900 à 1100 °C.

11. Procédé selon la revendication 1, comprenant en outre la pulvérisation de la poudre de BaTiO₃ produite.

12. Procédé selon la revendication 11, dans lequel la poudre de BaTiO₃ pulvérisée a une distribution de taille de particule uniforme, avec une taille moyenne de particule de 150 nm à 250 nm, un D10/D50 d'au moins 0,6 et un D90/D50 de jusqu'à 1,4 sur la base d'une image de microscope électronique à balayage à émission de champ MEB-EC (FE-SEM).

13. Procédé selon la revendication 11, dans lequel la poudre de BaTiO₃ pulvérisée a une surface spécifique BET d'au moins 5,0 m²/g et, sur la base d'une image de microscope électronique à balayage à émission de champ MEB-EC (FE-SEM), un rapport c/a de l'axe c sur l'axe a du réseau cristallin de la poudre d'au moins 1,009.

14. Procédé de fabrication d'une poudre céramique diélectrique comprenant les étapes consistant :
à disperser une poudre de BaCO₃ dans une solution d'un solvant et d'un dispersant pour préparer une suspension puis à broyer la poudre à l'état humide ;
à mélanger la suspension de poudre de CaCO₃ et la suspension de poudre de TiO₂ dans la suspension de BaCO₃ broyée à l'état humide pour former une suspension mixte, puis à sécher la suspension mixte ; et
à calciner la poudre mixte séchée pour produire une poudre de BaCaTiO₃.

15. Procédé selon la revendication 14, dans lequel le solvant comprend de l'eau distillée ou un alcool.

16. Procédé selon la revendication 14, dans lequel le dispersant est polyacrylique, et est ajouté dans la proportion de 1 à 5 parties en poids par rapport à la poudre de BaCO₃.

17. Procédé selon la revendication 14, dans lequel la poudre de BaCO₃ a une surface spécifique de 5 à 30 m²/g par mesure BET.

18. Procédé selon la revendication 14, dans lequel la poudre de BaCO₃ est dispersée dans la solution de sorte que la suspension de BaCO₃ contient 10 à 60 % en poids de BaCO₃.

19. Procédé selon la revendication 14, dans lequel la suspension de BaCO₃ est broyée à l'état humide à un degré tel que la poudre de BaCO₃ a une surface spécifique d'au moins 30 m²/g.

20. Procédé selon la revendication 14, dans lequel, dans l'étape de broyage à l'état humide, de l'ammoniaque est ajoutée pour réduire la viscosité de la suspension.

21. Procédé selon la revendication 20, dans lequel l'ammoniaque est ajoutée dans la proportion d'au moins 0,1 partie en poids par rapport au solvant.

22. Procédé selon la revendication 14, dans lequel la poudre de TiO₂ a une surface spécifique d'au moins 20 m²/g.

23. Procédé selon la revendication 14, dans lequel la température de calcination va de 900 à 1100 °C.

24. Procédé selon la revendication 14, comprenant en outre la pulvérisation de la poudre de BaCaTiO₃ produite.

25. Procédé selon la revendication 24, dans lequel la poudre de BaCaTiO₃ pulvérisée a une distribution de taille de particule uniforme, avec des tailles moyennes de particule de 150 nm à 250 nm, un D10/D50 d'au moins 0,6 et un D90/D50 de jusqu'à 1,4 sur la base d'une image de microscope électronique à balayage à émission de champ MEB-EC (FE-SEM).

26. Procédé selon la revendication 24, dans lequel la poudre de BaCaTiO₃ pulvérisée a une surface spécifique BET d'au moins 5,0 m²/g et, sur la base d'une image de microscope électronique à balayage à émission de champ MEB-EC (FE-SEM), un rapport c/a de l'axe c sur l'axe a du réseau cristallin de la poudre est d'au moins 1,009.

27. Condensateur céramique multicouche comprenant :
une structure céramique multicouche ayant une pluralité de couches diélectriques et une pluralité d'électrodes internes alternant avec les couches diélectriques ; et
des électrodes externes fournies aux deux extrémités du condensateur céramique multicouche, raccordées électriquement à au moins l'une des électrodes internes,
dans lequel les couches diélectriques comprennent une poudre céramique diélectrique fabriquée selon la revendication 1 ou la revendication 14.

28. Condensateur céramique multicouche selon la revendication 27, dans lequel la poudre céramique a une distribution de taille de particule uniforme, avec une taille moyenne de particule de 150 nm à 250 nm, un D10/D50 d'au moins 0,6 et un D90/D50 de jusqu'à 1,4 sur la base d'une image de microscope électronique à balayage à émission de champ MEB-EC (FE-SEM).

29. Condensateur multicouche selon la revendication 27, dans lequel la poudre céramique a une surface spécifique BET d'au moins 5,0 m²/g et, sur la base d'une image de microscope électronique à balayage à émission de champ MEB-EC (FE-SEM), un rapport c/a de l'axe c sur l'axe a du réseau cristallin de la poudre est d'au moins 1,009.
